# EUROPÄISCHE PATENTSCHRIFT

(11) **EP 1 462 328 B1**
(45) Veröffentlichungstag und Bekanntmachung des Hinweises auf die Patenterteilung: **13.04.2011**
(21) Anmeldenummer: 04002284.0
(22) Anmeldetag: 03.02.2004
(51) Int. Cl.: B60S 1/34

(54) **Wischarmgelenkvorrichtung**
Wiper arm articulation device
Dispositif d'articulation d'un bras d'essuie-glace

(30) Priorität: 25.03.2003 DE 10313227
(43) Veröffentlichungstag der Anmeldung: 29.09.2004
(73) Patentinhaber: ROBERT BOSCH GMBH, 70442 Stuttgart (DE)
(72) Erfinder: Weiler, Michael, 363-9 Chungchongbuk-Do (KR); Zimmer, Joachim, 77880 Sasbach (DE)

(56) Entgegenhaltungen:
- WO-A-01/62560
- DE-A1- 10 052 616
- DE-C- 863 459
- FR-A- 1 076 875
- US-A- 3 716 888

## Beschreibung

### Stand der Technik

Die Erfindung geht aus von einer Wischarmgelenkvorrichtung nach dem Oberbegriff des Anspruchs 1.

Es sind Wischarmgelenkvorrichtungen mit einer in der Regel von einem Befestigungsteil gebildeten ersten Einheit und einer von einer Wischstange gebildeten zweiten Einheit bekannt, die über ein Gelenk und über eine Schraubenzugfeder zur Erzeugung einer Auflagekraft verbunden sind.

Aus der FR-A-1 076 875 ist eine Wischarmgelenkvorrichtung mit den Merkmalen des Oberbegriffs des Anspruchs 1 bekannt.

### Vorteile der Erfindung

Die Erfindung geht aus von einer Wischarmgelenkvorrichtung mit einer einem Befestigungsteil zugeordneten ersten Einheit und einer einer Wischstange zugeordneten zweiten Einheit, die über eine Gelenkeinheit und eine Federeinheit zur Erzeugung einer Auflagekraft verbunden sind, wobei die Federeinheit wenigstens eine Blattfeder aufweist, gekennzeichnet durch eine bistabile Ausgestaltung der Blattfeder.

Es wird vorgeschlagen, dass die Federeinheit wenigstens eine Blattfeder aufweist, wodurch eine besonders flachbauende Konstruktion mit wenigen Bauteilen erreichbar ist. Dabei kann die Blattfeder aus verschiedenen, dem Fachmann als sinnvoll erscheinenden Materialien gebildet sein, wie beispielsweise aus einem Federstahl, einem Kohlefaserwerkstoff, einem Kunststoff usw.

In einer weiteren Ausgestaltung der Erfindung wird vorgeschlagen, dass die Wischarmgelenkvorrichtung eine zumindest weitgehend symmetrische Anordnung der Gelenkeinheit und der Federeinheit zueinander quer zur Längserstreckung im Bereich der Gelenkeinheit aufweist. Ungewünschte Verspannungen der Gelenkeinheit können vermieden und die Gelenkeinheit kann besonders flachbauend ausgeführt werden.

Weist die Gelenkeinheit zumindest zwei quer zur Längserstrekkung beabstandete Gelenke auf und ist die Blattfeder zwischen den Gelenken angeordnet, kann eine symmetrische Anordnung vorteilhaft mit einer einzelnen, ganzflächigen Blattfeder erzielt werden. Grundsätzlich könnte jedoch auch eine zweite Blattfeder und/oder eine geschlitzte Blattfeder vorgesehen werden.

Ferner wird vorgeschlagen, dass die Blattfeder über zumindest eine Rastverbindung gehalten ist, wodurch eine besonders einfache und schnelle Montage erreicht werden kann. Anstatt einer Rastverbindung sind jedoch grundsätzlich auch andere, dem Fachmann als sinnvoll erscheinende kraftschlüssige, formschlüssige und/oder stoffschlüssige Befestigungsarten denkbar.

Ist an zumindest eine der beiden Einheiten wenigstens ein Befestigungsmittel für die Blattfeder einstückig angeformt, beispielsweise ein einen Aufnahmebereich bildendes Aufnahmemittel und/oder ein Rastmittel, können zusätzliche Bauteile, Montageaufwand und Kosten eingespart werden.

Ferner können zusätzliche Bauteile, Montageaufwand und Kosten eingespart werden, indem die erste Einheit zumindest teilweise einstückig mit dem Befestigungsteil und/oder die zweite Einheit zumindest teilweise einstückig mit der Wischstange ausgeführt ist. Grundsätzlich könnte jedoch auch die Wischarmgelenkvorrichtung mit einer von herkömmlichen Wischarmen bekannten Wischstange und/oder mit einem von herkömmlichen Wischarmen bekannten Befestigungsteil kombiniert werden.

Die erfindungsgemäße Wischarmgelenkvorrichtung ist bistabil ausgestaltet bzw. die Blattfeder ist insbesondere in der Weise angeordnet, dass dieselbe eine instabile Zwischenstellung aufweist, kann vorteilhaft eine stabile Aufklappstellung und eine stabile Anlieferstellung erreicht werden.

In einer weiteren Ausgestaltung der Erfindung wird vorgeschlagen, dass die Wischarmgelenkvorrichtung wenigstens einen Anschlag zur Begrenzung eines Schwenkwinkels zwischen der ersten und der zweiten Einheit aufweist. Ist die Schwenkbewegung durch einen Anschlag in Richtung der von der Federeinheit erzeugbaren Auflagekraft begrenzt, kann insbesondere eine vorteilhafte Anlieferstellung und eine einfache Montage erreicht werden. Ist die Schwenkbewegung durch einen Anschlag in Aufklapprichtung begrenzt, kann insbesondere eine Überdehnung des Federelements beim Aufklappen sicher vermieden werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Ausschnitt eines Wischarms mit einer erfindungsgemäßen Wischarmgelenkvorrichtung in einer Aufklappstellung,
- Fig. 2: den Wischarm aus Fig. 1 in einer instabilen Zwischenstellung,
- Fig. 3: den Wischarm aus Fig. 1 in einer Anlieferstellung,
- Fig. 4: einen Ausschnitt eines Befestigungsteils des Wischarms aus Fig. 1 schräg von unten bei der Montage einer Blattfeder der Federeinheit,
- Fig. 5: einen Schnitt entlang der Linie V-V in Fig. 7,
- Fig. 6: einen Schnitt gemäß Fig. 5 nach der Montage der Blattfeder,
- Fig. 7: einen Ausschnitt eines alternativen Wischarms mit einer asymmetrischen Anordnung einer Gelenkeinheit und einer Federeinheit in einer Aufklappstellung,
- Fig. 8: den Wischarm aus Fig. 7 in einer instabilen Zwischenstellung und
- Fig. 9: den Wischarm aus Fig. 7 in einer Anlieferstellung.

### Beschreibung der Ausführungsbeispiele

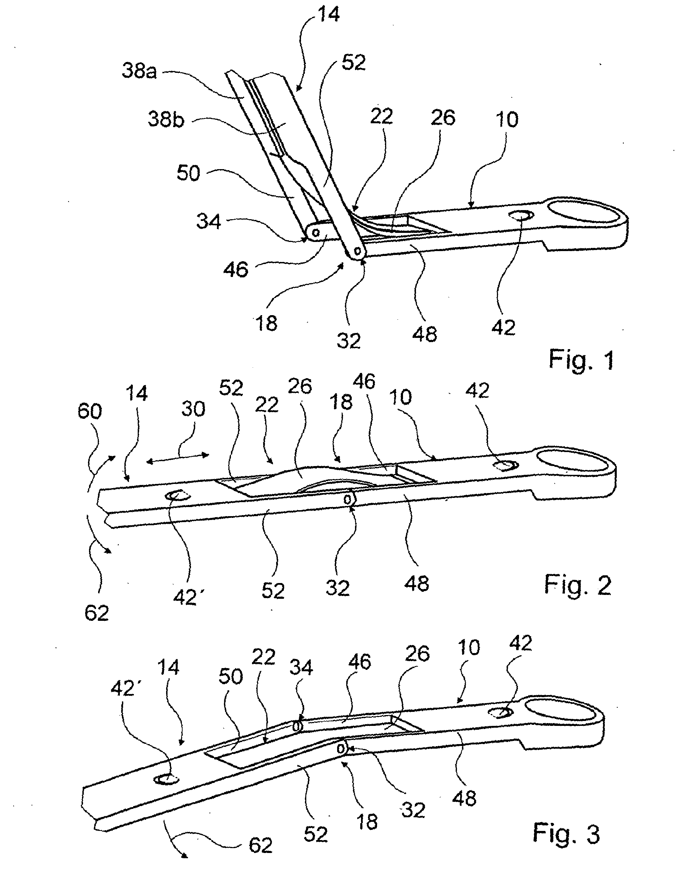

Fig. 1 zeigt einen Ausschnitt eines Wischarms mit einer Wischarmgelenkvorrichtung, die eine von einem Befestigungsteil 10 gebildete erste Einheit und eine von einer Wischstange 14 gebildete zweite Einheit aufweist.

Das Befestigungsteil 10 und die Wischstange 14 sind über eine Gelenkeinheit 18 und über eine Federeinheit 22 zur Erzeugung einer Auflagekraft verbunden. Das Befestigungsteil 10 und die Wischstange 14 werden jeweils von einem Stanz-Biegeblechteil gebildet.

Die Federeinheit 22 umfasst erfindungsgemäß eine Blattfeder 26 aus Federstahl bzw. wird von derselben gebildet. Die Gelenkeinheit 18 und die Federeinheit 22 sind quer zur Längserstreckung 30 im Bereich der Gelenkeinheit 18 symmetrisch zueinander angeordnet (Fig. 1 bis 3). Die Gelenkeinheit 18 weist zwei quer zur Längserstreckung 30 beabstandete Gelenke 32, 34 auf, wobei die Blattfeder 26 quer zur Längserstreckung 30 zwischen den Gelenken 32, 34 angeordnet ist.

Das Befestigungsteil 10 weist an seinem zur Wischstange 14 weisenden Ende zwei stegartige, einen U-förmigen Aufnahmebereich bildende, einstückig angeformte Fortsätze 46, 48 auf, die jeweils einen ersten Teil eines der Gelenke 32, 34 bilden. Ferner weist die Wischstange 14 an ihrem zum Befestigungsteil 10 weisenden Ende zwei stegartige, einen U-förmigen Aufnahmebereich bildende, einstückig angeformte Fortsätze 50, 52 auf, die jeweils einen zweiten Teil eines der Gelenke 32, 34 bilden. Die Fortsätze 46, 48, 50, 52 sind durch von Nieten gebildete Lagerachsen verbunden, wobei grundsätzlich auch eine Lagerachse an zumindest einen der Fortsätze 46, 48, 50, 52 einstückig angeformt sein könnte. Durch die U-förmigen Aufnahmebereiche entsteht ein vorteilhafter Bewegungsfreiraum für die Blattfeder 26.

An das Befestigungsteil 10 und an die Wischstange 14 sind jeweils einen Aufnahmebereich für die Blattfeder 26 bildende Befestigungsmittel 38a, 38b, 40a, 40b einstückig angeformt bzw. sind das Befestigungsteil 10 und die Wischstange 14 an ihren zueinander weisenden Enden jeweils zu einem zur Unterseite hin offenen C-Profil geformt.

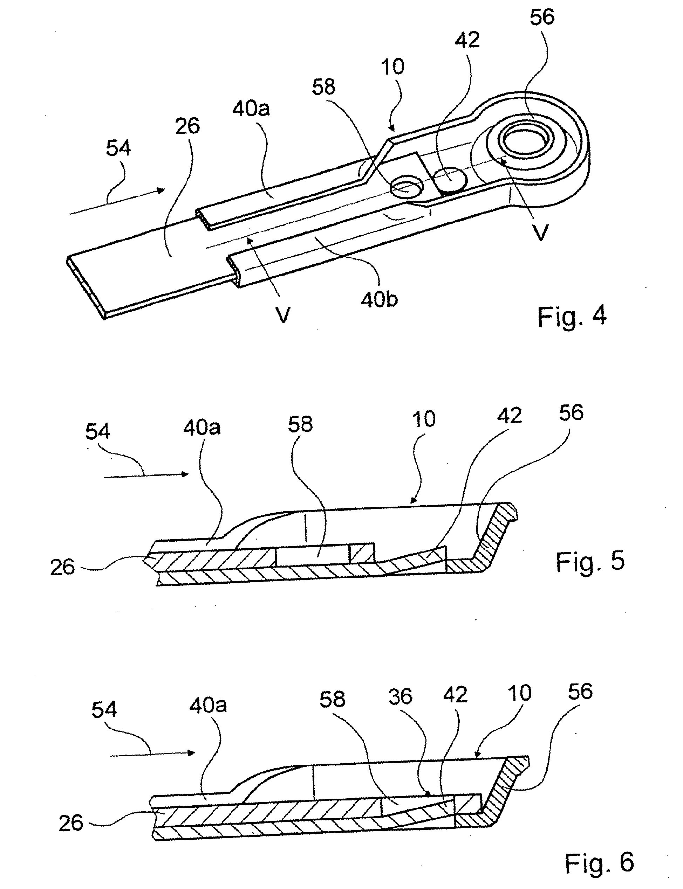

Bei der Montage der Blattfeder 26 am Befestigungsteil 10 wird die Blattfeder 26 in den von den Befestigungsmitteln 40a, 40b gebildeten Aufnahmebereich eingeschoben (Fig. 4, 5 und 6). In Einschubrichtung 54 kurz vor einer kegelstumpfförmigen Ausformung 56 zur Kopplung an eine Antriebswelle einer Scheibenwischanlage ist an das Befestigungsteil 10 ein von einem Rastmittel gebildetes Befestigungsmittel 42 angeformt, das von einem kreisrunden, teilweise freigeschnittenen Blechabschnitt gebildet ist, der in Einschubrichtung 54 eine ansteigende, über eine Unterseite des Befestigungsteils 10 hinausragende Schrägfläche bildet.

Kommt die Blattfeder 26 beim Einschieben derselben mit ihrem freien Ende in den Bereich des Befestigungsmittels 42, wird das freie Ende der Blattfeder 26 durch die Schrägfläche senkrecht zur Einschubrichtung 54 und senkrecht zur Unterseite des Befestigungsteils 10 ausgelenkt, rastet anschließend bei einer fortgeführten Einschubbewegung mit einem von einer kreisrunden Durchgangsöffnung gebildeten zweiten Rastmittel 58 am das erste Rastmittel bildenden Befestigungsmittel 42 ein und ist sicher mit dem Befestigungsteil 10 über eine sich daraus ergebende Rastverbindung 36 verbunden (Fig. 6). Die kegelstumpfförmige Ausformung 56 dient dabei als Anschlag für die Blattfeder 26 in Einschubrichtung 54.

Die Montage der Blattfeder 26 an der Wischstange 14 entspricht der Montage der Blattfeder 26 am Befestigungsteil 10, wobei an die Wischstange 14 ein dem Befestigungsmittel 42 im Wesentlichen entsprechendes Befestigungsmittel 42' angeformt ist (Fig. 2 und 3).

Die Wischarmgelenkvorrichtung ist bistabil ausgestaltet, und zwar weist die Wischarmgelenkvorrichtung bei einer im Wesentlichen koaxialen Ausrichtung der Wischstange 14 zum Befestigungsteil 10 eine instabile Zwischenstellung auf, in der die Blattfeder 26 gestaucht ist (Fig. 2). Wird die Wischstange 14 über die Zwischenstellung in die von einer Betriebsstellung abgewandte Richtung 60 geschwenkt, wird die durch die Stauchung verursachte Spannung innerhalb der Blattfeder 26 zumindest teilweise abgebaut und die Wischstange 14 verharrt in einer stabilen Aufklappstellung (Fig. 1). Befindet sich die Wischstange 14 in ihrer stabilen Aufklappstellung, kann ein an der Wischstange 14 montiertes, nicht näher dargestelltes Wischblatt komfortabel demontiert und montiert oder eine Windschutzscheibe kann komfortabel gereinigt werden.

Wird die Wischstange 14 von der Aufklappstellung (Fig. 1) in Richtung 62 über die Zwischenstellung hinaus geschwenkt, wirkt eine die Auflagekraft erzeugende Spannkraft der Blattfeder 26 in die von der Zwischenstellung abgewandte Richtung 62.

Wird die Wischstange 14 über eine Betriebsstellung in Richtung 62 hinaus geschwenkt, kommt die Wischstange 14 in einer Anlieferstellung an einem nicht näher dargestellten Anschlag zur Anlage (Fig. 3).

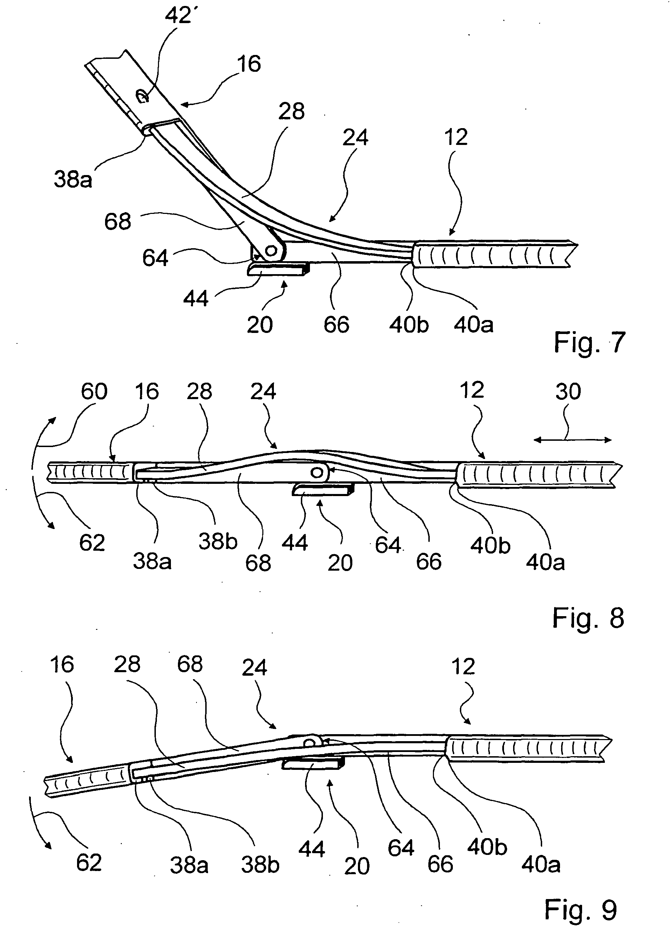

In den Fig. 7 bis 9 ist ein Ausschnitt eines alternativen Wischarms dargestellt. Bei den Ausführungsbeispielen sind in der Beschreibung im Wesentlichen gleiche Bauteile und Merkmale grundsätzlich mit den gleichen Bezugszeichen beziffert. Ferner kann bezüglich gleichbleibender Merkmale und Funktionen auf die Beschreibung zum Ausführungsbeispiel in den Fig. 1 bis 6 verwiesen werden. Die nachfolgende Beschreibung beschränkt sich im Wesentlichen auf die Unterschiede zum Ausführungsbeispiel in den Fig. 1 bis 6.

Der Wischarm umfasst eine Wischarmgelenkvorrichtung, die eine von einem Befestigungsteil 12 gebildete erste Einheit und eine von einer Wischstange 16 gebildete zweite Einheit aufweist. Das Befestigungsteil 12 und die Wischstange 16 sind über eine Gelenkeinheit 20 mit einem einzelnen Gelenk 64 und über eine Federeinheit 24 zur Erzeugung einer Auflagekraft verbunden. Das Befestigungsteil 12 und die Wischstange 16 werden jeweils von einem Stanz-Biegeblechteil gebildet.

Die Federeinheit 24 umfasst erfindungsgemäß eine Blattfeder 28 aus Federstahl bzw. wird von derselben gebildet. Die Gelenkeinheit 20 und die Federeinheit 24 sind quer zur Längserstreckung 30 im Bereich der Gelenkeinheit 20 hintereinander angeordnet (Fig. 7 bis 9).

Das Befestigungsteil 12 weist an seinem zur Wischstange 16 weisenden Ende einen stegartigen, einstückig angeformten Fortsatz 66 auf, der ein erstes Teil des Gelenks 64 bildet. Ferner weist die Wischstange 16 an ihrem zum Befestigungsteil 12 weisenden Ende einen stegartigen, einstückig angeformten Fortsatz 68 auf, der ein zweites Teil des Gelenks 64 bildet. Die Fortsätze 66, 68 sind durch eine von einer Niete gebildete Lagerachse verbunden.

Die Wischarmgelenkvorrichtung ist bistabil ausgestaltet, und zwar weist die Wischarmgelenkvorrichtung bei einer im Wesentlichen koaxialen Ausrichtung der Wischstange 16 zum Befestigungsteil 12 eine instabile Zwischenstellung auf, in der die Blattfeder 28 gestaucht ist (Fig. 8). Wird die Wischstange 16 in die von einer Betriebsstellung abgewandte Richtung 60 über die Zwischenstellung geschwenkt, wird die durch die Stauchung verursachte Spannung innerhalb der Blattfeder 28 zumindest teilweise abgebaut und die Wischstange 16 verharrt in einer stabilen Aufklappstellung (Fig. 7).

Wird die Wischstange 16 von der Aufklappstellung (Fig. 7) in Richtung 62 über die Zwischenstellung hinaus geschwenkt, wirkt eine die Auflagekraft erzeugende Spannkraft der Blattfeder 28 in die von der Zwischenstellung abgewandte Richtung 62.

Wird die Wischstange 16 über eine Betriebsstellung in Richtung 62 hinaus geschwenkt, kommt die Wischstange 16 mit ihrem Fortsatz 68 in einer Anlieferstellung an einem Anschlag 44 zur Anlage (Fig. 9). Der Anschlag 44 ist einstückig an den stegartigen Fortsatz 66 des Befestigungsteils 12 im Bereich des Gelenks 64 zur Begrenzung des Schwenkwinkels zwischen dem Befestigungsteil 12 und der Wischstange 16 angeformt.

### Bezugszeichen

- 10: Befestigungsteil
- 12: Befestigungsteil
- 14: Wischstange
- 16: Wischstange
- 18: Gelenkeinheit
- 20: Gelenkeinheit
- 22: Federeinheit
- 24: Federeinheit
- 26: Blattfeder
- 28: Blattfeder
- 30: Längserstreckung
- 32: Gelenk
- 34: Gelenk
- 36: Rastverbindung
- 38: Befestigungsmittel
- 40: Befestigungsmittel
- 42: Befestigungsmittel
- 44: Anschlag
- 46: Fortsatz
- 48: Fortsatz
- 50: Fortsatz
- 52: Fortsatz
- 54: Einschubrichtung
- 56: Ausformung
- 58: Rastmittel
- 60: Richtung
- 62: Richtung
- 64: Gelenk
- 66: Fortsatz
- 68: Fortsatz

## Patentansprüche

1. Wischarmgelenkvorrichtung mit einer einem Befestigungsteil (10, 12) zugeordneten ersten Einheit und einer einer Wischstange (14, 16) zugeordneten zweiten Einheit, die über eine Gelenkeinheit (18, 20) und eine Federeinheit (22, 24) zur Erzeugung einer Auflagekraft verbunden sind, wobei die Federeinheit (22, 24) wenigstens eine Blattfeder (26, 28) aufweist, **gekennzeichnet durch** eine bistabile Ausgestaltung der Blattfeder.

2. Wischarmgelenkvorrichtung nach Anspruch 1, **gekennzeichnet durch** eine zumindest weitgehend symmetrische Anordnung der Gelenkeinheit (18) und der Federeinheit (22) zueinander quer zur Längserstreckung (30) im Bereich der Gelenkeinheit (18).

3. Wischarmgelenkvorrichtung nach Anspruch 2, **dadurch gekennzeichnet, dass** die Gelenkeinheit (18) zumindest zwei quer zur Längserstreckung (30) beabstandete Gelenke (32, 34) aufweist und die Blattfeder (26) zwischen den Gelenken (32, 34) angeordnet ist.

4. Wischarmgelenkvorrichtung nach einem der vorhergehenden Ansprüche, **dadurch gekennzeichnet, dass** die Blattfeder (26, 28) über zumindest eine Rastverbindung (36) gehalten ist.

5. Wischarmgelenkvorrichtung nach einem der vorhergehenden Ansprüche, **dadurch gekennzeichnet, dass** an zumindest eine der beiden Einheiten wenigstens ein Befestigungsmittel (38a, 38b, 40a, 40b, 42) für die Blattfeder (26, 28) einstückig angeformt ist.

6. Wischarmgelenkvorrichtung nach einem der vorhergehenden Ansprüche, **dadurch gekennzeichnet, dass** die erste Einheit zumindest teilweise einstückig mit dem Befestigungsteil (10, 12) ausgeführt ist.

7. Wischarmgelenkvorrichtung nach einem der vorhergehenden Ansprüche, **dadurch gekennzeichnet, dass** die zweite Einheit zumindest teilweise einstückig mit der Wischstange (14, 16) ausgeführt ist.

8. Wischarmgelenkvorrichtung nach einem der vorhergehenden Ansprüche,
**gekennzeichnet durch** wenigstens einen Anschlag (44) zur Begrenzung eines Schwenkwinkels zwischen der ersten und der zweiten Einheit.

9. Wischarm mit einer Wischarmgelenkvorrichtung nach einem der vorhergehenden Ansprüche.

## Claims

1. Wiper arm articulation device with a first unit assigned to a fastening part (10, 12) and with a second unit assigned to a wiper rod (14, 16), the units being connected via an articulation unit (18, 20) and a spring unit (22, 24) for generating a bearing force, wherein the spring unit (22, 24) has at least one leaf spring (26, 28), **characterized by** a bistable configuration of the leaf spring.

2. Wiper arm articulation device according to Claim 1, **characterized by** an at least largely symmetrical arrangement of the articulation unit (18) and of the spring unit (22) to each other transversely with respect to the longitudinal extent (30) in the region of the articulation unit (18).

3. Wiper arm articulation device according to Claim 2, **characterized in that** the articulation unit (18) has at least two joints (32, 34) spaced apart transversely with respect to the longitudinal extent (30) and the leaf spring (26) is arranged between the joints (32, 34).

4. Wiper arm articulation device according to one of the preceding claims, **characterized in that** the leaf spring (26, 28) is held via at least one latching connection (36).

5. Wiper arm articulation device according to one of the preceding claims, **characterized in that** at least one fastening means (38a, 38b, 40a, 40b, 42) for the leaf spring (26, 28) is formed integrally on at least one of the two units.

6. Wiper arm articulation device according to one of the preceding claims, **characterized in that** the first unit is at least partially formed integrally with the fastening part (10, 12).

7. Wiper arm articulation device according to one of the preceding claims, **characterized in that** the second unit is at least partially formed integrally with the wiper rod (14, 16).

8. Wiper arm articulation device according to one of the preceding claims, **characterized by** at least one stop (44) for limiting a pivoting angle between the first and the second unit.

9. Wiper arm with a wiper arm articulation device according to one of the preceding claims.

## Revendications

1. Dispositif d'articulation d'un bras d'essuie-glace comprenant une première unité associée à une partie de fixation (10, 12) et une deuxième unité associée à une tige d'essuie-glace (14, 16), lesquelles sont connectées par le biais d'une unité d'articulation (18, 20) et d'une unité de ressort (22, 24) pour produire une force d'appui, l'unité de ressort (22, 24) présentant au moins un ressort à lame (26, 28), **caractérisé par** une configuration bistable du ressort à lame.

2. Dispositif d'articulation d'un bras d'essuie-glace selon la revendication 1, **caractérisé par** un agencement au moins sensiblement symétrique de l'unité d'articulation (18) et de l'unité de ressort (22) l'une par rapport à l'autre transversalement à l'étendue longitudinale (30) dans la région de l'unité d'articulation (18).

3. Dispositif d'articulation d'un bras d'essuie-glace selon la revendication 2, **caractérisé en ce que** l'unité d'articulation (18) présente au moins deux articulations (32, 34) espacées transversalement à l'étendue longitudinale (30) et le ressort à lame (26) est disposé entre les articulations (32, 34).

4. Dispositif d'articulation d'un bras d'essuie-glace selon l'une quelconque des revendications précédentes, **caractérisé en ce que** le ressort à lame (26, 28) est maintenu par le biais d'au moins une connexion par encliquetage (36).

5. Dispositif d'articulation d'un bras d'essuie-glace selon l'une quelconque des revendications précédentes, **caractérisé en ce qu'**au moins un moyen de fixation (38a, 38b, 40a, 40b, 42) pour le ressort à lame (26, 28) est formé d'une seule pièce sur au moins l'une des deux unités.

6. Dispositif d'articulation d'un bras d'essuie-glace selon l'une quelconque des revendications précédentes, **caractérisé en ce que** la première unité est réalisée au moins en partie d'une seule pièce avec la partie de fixation (10, 12).

7. Dispositif d'articulation d'un bras d'essuie-glace selon l'une quelconque des revendications précédentes, **caractérisé en ce que** la deuxième unité est réalisée au moins en partie d'une seule pièce avec la tige d'essuie-glace (14, 16).

8. Dispositif d'articulation d'un bras d'essuie-glace selon l'une quelconque des revendications précédentes, **caractérisé par** au moins une butée (44) pour limiter un angle de pivotement entre la première et la deuxième unité.

9. Bras d'essuie-glace avec un dispositif d'articulation d'un bras d'essuie-glace selon l'une quelconque des revendications précédentes.
